# EUROPEAN PATENT APPLICATION

(11) **EP 3 971 926 A1**
(43) Date of publication of application: **23.03.2022**
(21) Application number: 20806263.8
(22) Date of filing: 28.04.2020
(51) Int. Cl.: H01G 11/78, H01M 2/02

(54) **EXTERIOR MATERIAL FOR ELECTRIC STORAGE DEVICE**

(30) Priority: 15.05.2019 JP 2019091943
(71) Applicant: TOPPAN INC., Tokyo 110-0016 (JP)
(72) Inventor: MURATA, Koji, Tokyo 110-0016 (JP); SUZUTA, Masayoshi, Tokyo 110-0016 (JP)
(74) Representative: Hoffmann Eitle
(86) International application number: PCT/JP2020/018148
(87) International publication number: WO 2020/230629

(57) **Abstract**

Provided is a power storage device packaging material including at least a substrate protective layer, a substrate layer, an adhesive layer, a metal foil layer, and a sealant layer in this order from an outer surface side, wherein the substrate protective layer is made of a cured curable resin containing a plurality of types of particles having different average particle sizes, the curable resin contains a polyol component as a base resin and a polyisocyanate component as a hardener, and when, of the plurality of types of particles, particles having a large average particle size are referred to as a large filler and particles having a small average particle size are referred to as a small filler, the average particle size of the large filler is 10 µm or more, and the average particle size of the small filler is 1 µm or more, and an amount of the large filler contained in the substrate protective layer is 3 mass% or more, and an amount of the small filler contained in the substrate protective layer is 5 mass% or more.

## Description

### [Technical Field]

The present disclosure relates to a packaging material for a power storage device.

### [Background Art]

Known power storage devices include secondary batteries such as lithium ion batteries, nickel hydride batteries, and lead batteries, and electrochemical capacitors such as electric double layer capacitors. As mobile devices have been downsized or limited in installation space, there have been demands for further downsized power storage devices. Accordingly, lithium ion batteries having high energy density have been attracting attention. Conventional packaging materials for lithium ion batteries have been metal cans. However, film packaging materials have been increasingly used due to their light weight, high heat dissipation, and low production cost.

Film packaging materials prevent moisture from penetrating into lithium ion batteries. Thus, as a film packaging material, a film having a multilayer structure with a layer configuration including a metal foil is used. A lithium ion battery is produced by forming a recess in the film packaging material by cold forming, placing battery contents in the recess, folding the remaining part of the packaging material, and sealing the edge portions by heat sealing (see PTL 1).

In some cases, in order to prevent contamination during the process of producing such a film packaging material having a multilayer structure, the film packaging material is produced while a protective film having low adhesion is bonded to the outer surface of the film packaging material in such a manner that the protective film is easily peeled off. In particular, in a lithium ion battery packaging material having a matte outer surface, a substrate protective layer containing particles and having a matte appearance is disposed on the outer surface of the packaging material. Accordingly, a battery electrolyte or the like attached to a surface of the substrate protective layer may change an appearance of the surface of the substrate protective layer. Thus, such a packaging material having a matte outer surface is usually produced with a protective film for protecting the substrate protective layer is bonded to the substrate protective layer.

The protective film is peeled off during the battery producing process or after producing the battery. When the protective film having low adhesion is peeled off, it is necessary to prevent a pressure-sensitive adhesive used for the protective film from remaining on the outer surface of the packaging material.

When a lithium ion battery produced in this manner is used, the lithium ion battery is adhered and fixed to an electric device by using a double-sided tape having high adhesion (PSA tape). When the lithium ion battery is adhered and fixed to the electric device in this manner, the PSA tape needs to be firmly adhered to the outer surface of the packaging material.

### [Citation List]

### [Patent Literature]

[PTL 1] JP 2013-101765 A

### [Summary of the Invention]

### [Technical Problem]

As described above, although the protective film and the PSA tape are an adhesive film and an adhesive tape, respectively, one of them (protective film) needs to be able to be peeled off without leaving the pressure-sensitive adhesive on the outer surface of the packaging material, and the other (PSA tape) needs to be firmly adhered to the outer surface of the packaging material.

Thus, an object of the present disclosure is to provide a power storage device packaging material that allows a protective film used as described above in a production process to be peeled off from an outer surface of the packaging material without leaving a pressure-sensitive adhesive residue and also allows a PSA tape to be firmly adhered to the exposed outer surface of the packaging material.

### [Solution to Problem]

In order to achieve the above object, the present disclosure provides the following invention.
[1] A power storage device packaging material including at least a substrate protective layer, a substrate layer, an adhesive layer, a metal foil layer, and a sealant layer in this order from an outer surface side, wherein the substrate protective layer is made of a cured curable resin containing a plurality of types of particles having different average particle sizes, the curable resin contains a polyol component as a base resin and a polyisocyanate component as a hardener, and when, of the plurality of types of particles, particles having a large average particle size are referred to as a large filler and particles having a small average particle size are referred to as a small filler, the average particle size of the large filler is 10 µm or more, and the average particle size of the small filler is 1 µm or more, and an amount of the large filler contained in the substrate protective layer is 3 mass% or more, and an amount of the small filler contained in the substrate protective layer is 5 mass% or more.
[2] The power storage device packaging material according to [1], wherein the average particle size of the large filler is 30 µm or less, and the average particle size of the small filler is 5 µm or less, and the amount of the large filler is 25 mass% or less.
[3] The power storage device packaging material according to [1] or [2], wherein at least part of the polyisocyanate component is composed of an alicyclic polyisocyanate.
[4] The power storage device packaging material according to any one of [1] to [3], wherein at least part of the polyisocyanate component is composed of an aliphatic polyisocyanate or an aromatic polyisocyanate, and the amount of the large filler is 25 mass% or less, and a total amount of the large filler and the small filler is 50 mass% or less.
[5] The power storage device packaging material according to any one of [1] to [4], wherein the large filler contains particles of an organic material.
[6] The power storage device packaging material according to [5], wherein the large filler contains particles of a thermoplastic organic material, and the substrate protective layer has a thickness of 10 µm or less.
[7] The power storage device packaging material according to any one of [1] to [6], wherein the large filler contains particles of an inorganic material.
[8] The power storage device packaging material according to any one of [1] to [7], wherein the adhesive layer contains a color pigment.

### [Advantageous Effects of the Invention]

As can be seen from experimental examples described later, according to the invention described in [1], it is possible to peel off a protective film having low adhesion from the outer surface of the packaging material without leaving a pressure-sensitive adhesive residue and also to firmly adhere a PSA tape having high adhesion to the outer surface of the packaging material.

According to the invention described in [2], it is possible to enable the outer surface of the packaging material to have a matte appearance that is uniform and dense, thus allowing the packaging material to have a good appearance without roughness.

According to the invention described in [3], it is possible to peel off a protective film having low adhesion from the outer surface of the packaging material without leaving a pressure-sensitive adhesive residue and also to more firmly adhere a PSA tape having high adhesion to the outer surface of the packaging material.

According to the invention described in [4], it is possible to form a recess for accommodating a battery element in the packaging material by cold forming without causing cracks or peeling. From the viewpoint of more sufficiently obtaining such an effect, the polyisocyanate component may be configured such that part of the polyisocyanate component is composed of an alicyclic polyisocyanate and part of the polyisocyanate component is composed of an aliphatic polyisocyanate or an aromatic polyisocyanate.

According to the invention described in [5], it is possible to easily adjust the thickness of the substrate protective layer, thus allowing a reduction in the thickness of the substrate protective layer while ensuring peelability of the protective film and adhesion of the PSA tape. The reduction of the thickness of the substrate protective layer facilitates process management during cold forming of the power storage device packaging material. At this time, by setting the thickness of the substrate protective layer to be in the range described in [6], the above effect can be more sufficiently obtained.

According to the invention described in [7], no change in gloss of the outer surface of the packaging material is caused by cold forming; thus, cold forming can be performed while the outer surface maintains a matte appearance that is uniform and dense.

### [Brief Description of the Drawings]

Fig. 1 is a schematic cross-sectional view of a specific example of a power storage device packaging material of the present disclosure.
Fig. 2 is a set of diagrams illustrating a cold-formed power storage device packaging material of the present disclosure, in which (a) is a perspective view of the power storage device packaging material, and (b) is a longitudinal cross-sectional view taken along line b-b in Fig. 2 (a).

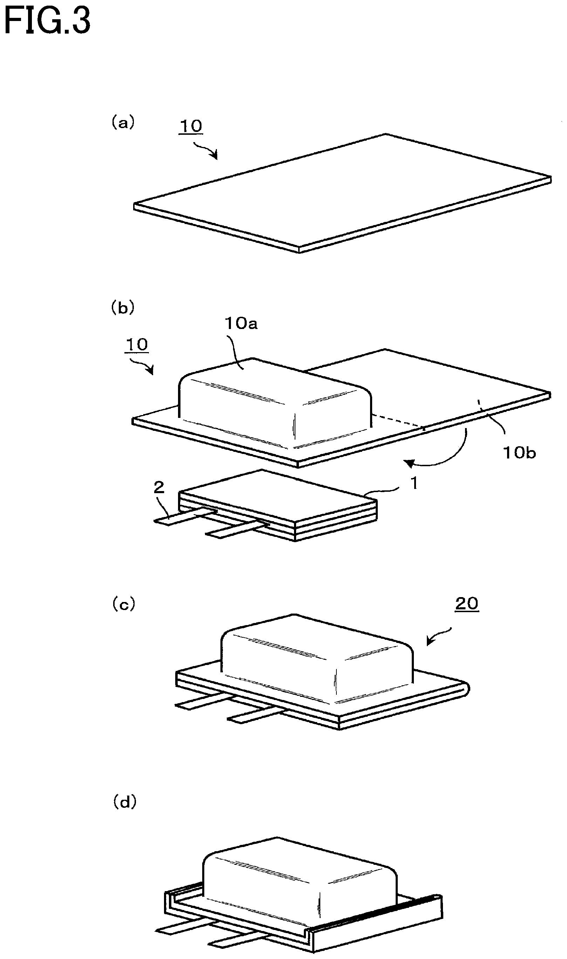

Fig. 3 is a set of diagrams illustrating a specific example of a method of producing a power storage device of the present disclosure, in which (a) is a perspective view of a state in which a power storage device packaging material is prepared, (b) is a perspective view of a state in which the power storage device packaging material and a battery element are prepared, (c) is a perspective view of a state in which part of the power storage device packaging material is folded and the ends are fused, and (d) is a perspective view of a state in which portions on both sides of the folded part are folded upward.

### [Description of the Embodiments]

Preferred embodiments of the present disclosure will be described in detail with reference to the drawings. In the drawings, the same or corresponding parts are denoted by the same reference signs, and duplicated description is omitted.

### [Power storage device packaging material]

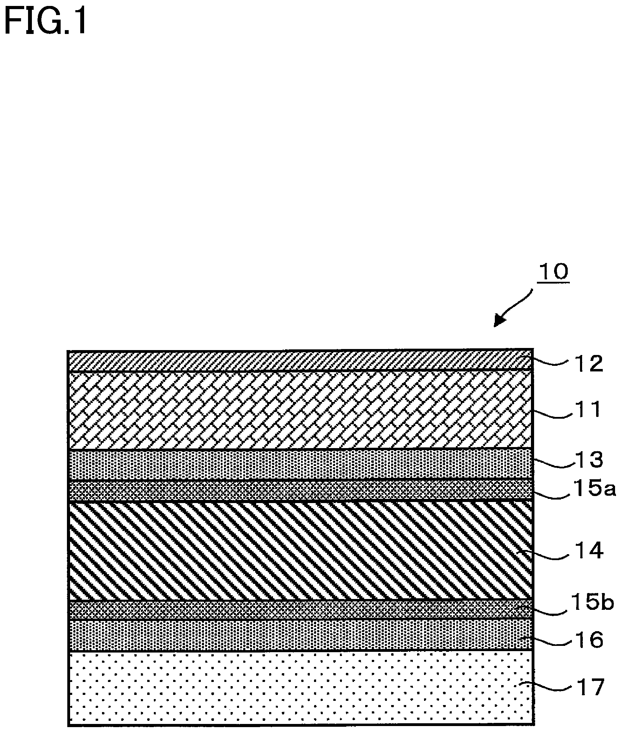

Fig. 1 is a schematic cross-sectional view of an embodiment of a power storage device packaging material of the present disclosure. As shown in Fig. 1, in a packaging material (power storage device packaging material) 10 of the present embodiment, a substrate protective layer 12, a substrate layer 11, a metal foil layer 14, and a sealant layer 17 are laminated in this order, and anticorrosion treatment layers 15a and 15b are provided on both surfaces of the metal foil layer 14. The substrate layer 11 is adhered to the metal foil layer 14 via an adhesive layer 13, and the metal foil layer 14 is adhered to the sealant layer 17 via a sealant adhesive layer 16. The packaging material 10 is used so that the substrate protective layer 12 is provided on the outer surface side of a power storage device and the sealant layer 17 is provided on the inner surface side of the power storage device. Each of the layers will be described below.

### (Substrate layer 11)

The substrate layer 11 imparts heat resistance in a sealing process during production of a power storage device, and prevents the possible occurrence of pinholes during the forming process and distribution. The substrate layer 11 can also impart scratch resistance, chemical resistance, insulating properties, and the like.

The substrate layer 11 is preferably composed of a resin film made of a resin having insulating properties. Examples of the resin film include stretched or unstretched films such as a polyester film, a polyamide film, and a polypropylene film. The substrate layer 11 may be a monolayer film made of one of these resin films, or a laminated film made of two or more of these resin films.

Of these films, the substrate layer 11 is preferably a polyamide film, and more preferably a biaxially stretched polyamide film, in terms of good formability. Examples of polyamide resins used to form the polyamide film include nylon 6, nylon 6,6, a copolymer of nylon 6 and nylon 6,6, nylon 6,10, polymetaxylylene adipamide (MXD6), nylon 11, and nylon 12. Of these, nylon 6 (ONy) is preferred from the viewpoint of good heat resistance, piercing strength, and impact strength.

### (Substrate protective layer 12)

The substrate protective layer 12 is located on the outer surface of the power storage device packaging material 10. The substrate protective layer 12 has a function of protecting the substrate layer 11, and enabling a protective film having low adhesion used during a battery production process to be adhered to the power storage device packaging material 10 and allowing the protective film to be easily peeled off without leaving a pressure-sensitive adhesive residue when the protective film is peeled off. Furthermore, the substrate protective layer 12 has a role of enabling a double-sided tape having high adhesion (PSA tape) to be firmly adhered and fixed to the power storage device packaging material 10 when the power storage device packaging material 10 is adhered and fixed to an electric device.

In order to fulfill these roles, the substrate protective layer 12 needs to be made of a cured curable resin containing a plurality of types of particles having different average particle sizes.

The curable resin contains a polyol component as a base resin and a polyisocyanate component as a hardener.

The polyol component may be any polyol, and may be, for example, a polyester polyol, an acrylic polyol, or a polyether polyol. The polyol component may be a mixture of a plurality of types of polyols. The polyol component may be preferably a polyester polyol or an acrylic polyol in terms of chemical resistance, adhesion to the substrate layer 11, and coating suitability.

The polyisocyanate component may be a single type of polyisocyanate, or a plurality of types of polyisocyanates. In either of the cases, the polyisocyanate component may contain an alicyclic polyisocyanate, or may contain an aliphatic polyisocyanate or an aromatic polyisocyanate, but the polyisocyanate component preferably contains an alicyclic polyisocyanate. Preferably, the polyisocyanate component contains an alicyclic polyisocyanate and an aliphatic polyisocyanate or an aromatic polyisocyanate so that part of the polyisocyanate component is composed of an alicyclic polyisocyanate and the remaining part is composed of an aliphatic polyisocyanate or an aromatic polyisocyanate.

As can be seen from experimental examples described later, in the case where the polyisocyanate component contains an alicyclic polyisocyanate, when a PSA tape having high adhesion is used to adhere and fix the power storage device packaging material 10 to an electric device, the PSA tape can be more firmly adhered and fixed to the power storage device packaging material 10 than in the case where the polyisocyanate component contains no alicyclic polyisocyanate. On the other hand, even in the case where the polyisocyanate component contains no aliphatic polyisocyanate or aromatic polyisocyanate, the PSA tape can be firmly adhered and fixed to the power storage device packaging material 10; however, cracks may occur during cold forming of the power storage device packaging material 10.

The alicyclic polyisocyanate may be, for example, methylcyclohexane diisocyanate, isophorone diisocyanate, 4,4'-dicyclohexylmethane diisocyanate, isopropylidene dicyclohexyl-4,4'-diisocyanate, or the like. The aliphatic polyisocyanate may be, for example, hexamethylene diisocyanate or the like. The aromatic polyisocyanate may be xylylene diisocyanate, tolylene diisocyanate, diphenylmethane diisocyanate, or the like.

Assuming that, of the plurality of types of particles having different average particle sizes, particles having a large average particle size are defined as a large filler and particles having a small average particle size are defined as a small filler, the large filler enables a surface of the substrate protective layer 12 to have a larger unevenness so that a protective film having low adhesion is in point contact with the surface of the substrate protective layer 12, thus allowing the protective film to be easily peeled off without leaving a pressure-sensitive adhesive used for the protective film on the surface of the substrate protective layer 12. For these reasons, the average particle size of the large filler needs to be 10 µm or more. If the average particle size of the large filler is smaller than this value, in response to the protective film being peeled off, the pressure-sensitive adhesive used for the protective film may remain on the surface of the substrate protective layer 12, i.e., the outer surface of the power storage device packaging material 10, thus hindering the double-sided tape from being adhered and fixed to the power storage device packaging material 10.

Furthermore, the average particle size of the large filler is preferably 30 µm or less. If the average particle size of the large filler is larger than this value, the surface of the substrate protective layer 12 does not have a matte appearance that is uniform and dense.

The amount of large filler contained in the substrate protective layer 12 needs to be 3 mass% or more. If the amount of large filler is smaller than this value, in response to the protective film being peeled off, the pressure-sensitive adhesive used for the protective film may remain on the surface of the substrate protective layer 12.

Furthermore, the amount of large filler contained in the substrate protective layer 12 is preferably 25 mass% or less. If the amount of large filler is larger than this value, the surface of the substrate protective layer 12 does not have a matte appearance that is uniform and dense.

On the other hand, the small filler enables the surface of the substrate protective layer 12 to have small unevenness, thus allowing the PSA tape to be firmly adhered and fixed to the power storage device packaging material 10. For these reasons, the average particle size of the small filler needs to be 1 µm or more. If the average particle size of the small filler is smaller than this value, the surface of the substrate protective layer 12 does not have a matte appearance that is uniform and dense, and has less unevenness, thus hindering the PSA tape from being firmly adhered and fixed to the power storage device packaging material 10.

Furthermore, the average particle size of the small filler is preferably 5 µm or less. If the average particle size of the small filler is larger than this value, the surface of the substrate protective layer 12 does not have a matte appearance that is uniform and dense.

The amount of small filler contained in the substrate protective layer 12 needs to be 5 mass% or more. If the amount of small filler is smaller than this value, the surface of the substrate protective layer 12 does not have a matte appearance that is uniform and dense, and has less unevenness, thus hindering the PSA tape from being firmly adhered and fixed to the power storage device packaging material 10.

Furthermore, the amount of small filler contained in the substrate protective layer 12 is preferably 45 mass% or less. If the amount of small filler is larger than this value, the surface of the substrate protective layer 12 does not have a matte appearance that is uniform and dense, and the substrate protective layer 12 becomes brittle and this may cause cracks during cold forming.

The total amount of large filler and small filler is preferably 50 mass% or less. This is because if the total amount is larger than this value, the substrate protective layer 12 becomes brittle, and cracks and the like are more likely to occur in the substrate protective layer during cold forming. Furthermore, the total amount is preferably 8 mass% or more.

The large filler and the small filler may be made of any material, and may be made of, for example, organic particles (particles of an organic material) or inorganic particles (particles of an inorganic material). Examples of the organic particles include polyolefin particles such as polyethylene particles, acrylic particles, urethane particles, and polyester particles. Examples of the inorganic particles include silica particles, alumina particles, barium sulfate particles, calcium carbonate particles, and titanium oxide particles.

As the large filler, inorganic particles may be used. When organic particles are used, in some cases, the large filler is deformed during cold forming, and a change in gloss occurs on the surface of the substrate protective layer 12, i.e., the outer surface of the power storage device packaging material 10. On the other hand, when inorganic particles are used, it is possible to prevent a change in gloss on the outer surface of the power storage device packaging material 10 by cold forming.

As the large filler, organic particles may be used. When organic particles are used, in production of the power storage device packaging material 10 through a lamination process, the organic particles are deformed, thus allowing a reduction in the thickness of the substrate protective layer 12. Of organic particles, the use of thermoplastic organic particles facilitates control of the thickness of the power storage device packaging material as a product. The thermoplastic organic particles may be, for example, polyolefin particles such as polyethylene particles. The reduction in the thickness of the substrate protective layer 12 facilitates process management during cold forming and the like. Even when the organic particles are deformed to increase the contact area with the protective film, an adhesive force between the organic particles (particularly, polyethylene particles or the like) and the protective film having low adhesion is not excessively increased, thus allowing the protective film to be easily peeled off without leaving the pressure-sensitive adhesive used for the protective film on the surface of the substrate protective layer 12.

The substrate protective layer 12 can be formed by dissolving or dispersing the components constituting the substrate protective layer 12 in a solvent to obtain a coating liquid, and applying the coating liquid to the substrate layer 11.

For example, the coating liquid can be prepared by dissolving the polyol component in a solvent to obtain a varnish, and adding large and small fillers and the polyisocyanate component to the varnish. Alternatively, the coating liquid can be prepared by dissolving the polyol component in a solvent to obtain a varnish, and dispersing large and small fillers in a solvent to produce a slurry, and then adding the slurry and the polyisocyanate component to the varnish.

In addition to the above materials, the coating liquid may contain additives such as a flame retardant, a lubricant, an antioxidant, a photostabilizer, a tackifier, a leveling agent, an antifoaming agent, a catalyst, and a reaction retardant. Examples of the lubricant include fatty acid amides such as oleic acid amide, erucic acid amide, stearic acid amide, behenic acid amide, ethylene bis-oleic acid amide, and ethylene bis-erucic acid amide. The reaction retardant may be, for example, acetylacetone.

The method of applying the coating liquid may be gravure direct coating, gravure reverse coating, micro-gravure coating, or the like.

The thickness of the substrate protective layer 12 may be 0.5 µm or more, 1.0 µm or more, or 1.5 µm or more, and may be 50 µm or less, 30 µm or less, 15 µm or less, or 10 µm or less. When the thickness is the lower limit or less, it is possible to more sufficiently obtain the function of protecting the substrate layer 11, the function of allowing a protective film having low adhesion to be easily peeled off without leaving a pressure-sensitive adhesive residue when the protective film is peeled off, and the function of enabling a PSA tape having high adhesion to be firmly adhered and fixed to the power storage device packaging material 10. When the thickness is the upper limit or less, it is possible to allow the entire power storage device packaging material 10 to have a small thickness, thus facilitating process management during cold forming of the power storage device packaging material 10. When the substrate protective layer 12 contains thermoplastic organic particles as the large filler, in the lamination process during production of the power storage device packaging material 10, the organic particles tend to be deformed, thus leading to a reduction in the thickness of the substrate protective layer 12. Accordingly, when the large filler contains thermoplastic organic particles or is made of only thermoplastic organic particles, the thickness of the substrate protective layer 12 may be 10 µm or less, 8 µm or less, or 6 µm or less.

### (Adhesive layer 13)

The adhesive layer 13 adheres the substrate layer 11 to the metal foil layer 14. The adhesive layer 13 has an adhesive force needed to firmly adhere the substrate layer 11 to the metal foil layer 14. In addition, the adhesive layer 13 has conformability (ability to reliably form the adhesive layer 13 on a member without separation, even when the member is deformed, stretched, or contracted) to prevent breakage of the metal foil layer 14 by the substrate layer 11 during cold forming.

An adhesive constituting the adhesive layer 13 may be, for example, a two-part curing type polyurethane adhesive including a base resin made of a polyol such as a polyester polyol, a polyether polyol, or an acrylic polyol, and a hardener made of an isocyanate such as an aromatic isocyanate or an aliphatic isocyanate. In this adhesive, the molar ratio (= NCO/OH) of the isocyanate group of the hardener to the hydroxyl group of the base resin is preferably in the range of 1 to 50, and more preferably in the range of 2 to 30.

After coating, the polyurethane adhesive is aged at 40°C or higher for 4 days or longer, for example. The aging advances reaction of the hydroxyl group of the base resin with the isocyanate group of the hardener, thus allowing the substrate layer 11 to be more firmly adhered to the metal foil layer 14.

The adhesive may contain a color pigment. The adhesive may contain, for example, a black pigment. The use of the adhesive layer 13 made of an adhesive containing a color pigment enables the power storage device packaging material 10 to be colored in the color of the color pigment and also enables a power storage device for which the power storage device packaging material 10 is used to have an appearance colored in the color of the color pigment, thus improving the designability of the power storage device.

### (Metal foil layer 14)

Various types of metal foil such as of aluminum and stainless steel may be used as the metal foil layer 14. The metal foil layer 14 is preferably an aluminum foil from the perspective of processability such as moisture resistance and ductility, and cost. The aluminum foil may be a general soft aluminum foil, but an aluminum foil containing iron is preferred from the viewpoint of good pinhole resistance and ductility when formed.

### (Anticorrosion treatment layers 15a and 15b)

The anticorrosion treatment layers 15a and 15b prevent corrosion of the metal foil layer 14 caused by an electrolyte or hydrofluoric acid produced by reaction of the electrolyte with water. The anticorrosion treatment layer 15a increases the adhesive force between the metal foil layer 14 and the adhesive layer 13. Further, the anticorrosion treatment layer 15b increases the adhesive force between the metal foil layer 14 and the sealant adhesive layer 16. The anticorrosion treatment layers 15a and 15b may have the same configuration or different configurations.

The anticorrosion treatment layers 15a and 15b can be formed by, for example, applying, to the metal foil layer 14, degreasing treatment, hydrothermal conversion treatment, anodizing treatment, chemical conversion treatment, or coating-type anticorrosion treatment involving application of a coating agent having anticorrosion ability, or a combination of these treatments.

### (Sealant adhesive layer 16)

The sealant adhesive layer 16 adheres the sealant layer 17 to the metal foil layer 14 on which the anticorrosion treatment layer 15b is formed. The sealant adhesive layer 16 may be made of an adhesive for dry lamination, or may be made of a molten adhesive resin. The sealant adhesive layer 16 may be made of a general adhesive for adhering the metal foil layer 14 to the sealant layer 17. The method of laminating the metal foil layer 14 on the sealant layer 17 via the sealant adhesive layer 16 may be, for example, dry lamination using an adhesive for dry lamination such as a polyurethane adhesive, or extrusion lamination or sandwich lamination using acid-modified polyolefin.

### (Sealant layer 17)

The sealant layer 17 imparts sealability to the power storage device packaging material 10 when heat sealed, and is located on the inner side and heat-sealed when the power storage device is assembled. The sealant layer 17 may be a resin film made of a polyolefin resin, or an acid-modified polyolefin resin obtained by graft-modifying a polyolefin resin with acid such as maleic anhydride. Of these materials, a polyolefin resin is preferred because it improves barrier properties against water vapor and can form the shape of the power storage device without being excessively deformed by heat sealing, and particularly, polypropylene is preferred.

### (Method of producing power storage device packaging material 10)

A method of producing the power storage device packaging material 10 will be described. The method of producing the power storage device packaging material 10 is not limited to the following method.

For example, the method of producing the power storage device packaging material 10 may include the following steps S11 to S14 performed in the order of S11, S12, S13, and S14.
Step S11: Forming the anticorrosion treatment layer 15a on a surface of the metal foil layer 14 and forming the anticorrosion treatment layer 15b on the other surface of the metal foil layer 14.
Step S12: Bonding a surface of the anticorrosion treatment layer 15a facing away from the metal foil layer 14 to the substrate layer 11 via the adhesive layer 13.
Step S13: Applying and forming the substrate protective layer 12 on a surface of the substrate layer 11 facing away from the adhesive layer 13.
Step S14: Forming the sealant layer 17, via the sealant adhesive layer 16, on a surface of the anticorrosion treatment layer 15b facing away from the metal foil layer 14.

### [Method of producing power storage device]

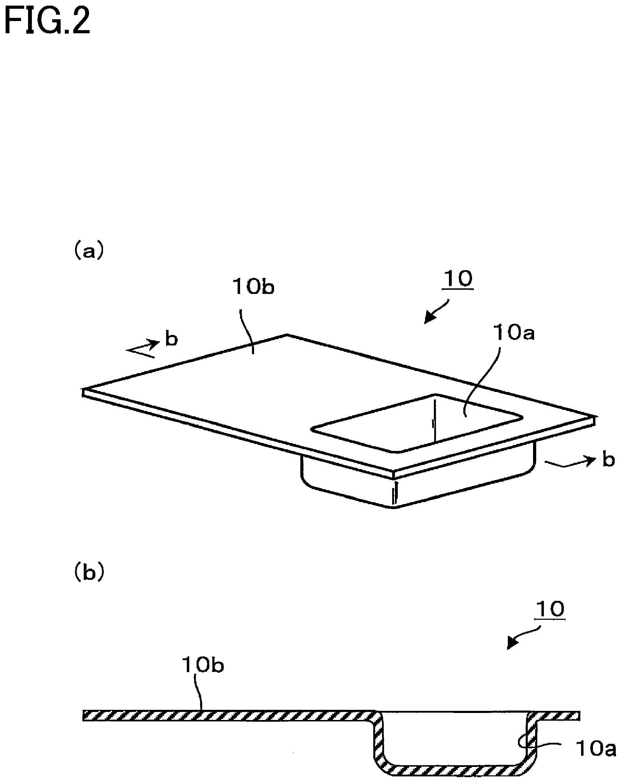

A method of producing a power storage device using the power storage device packaging material 10 will be described. Figs. 3 (a) to 3 (d) are perspective views illustrating a process of producing a single-sided battery. Fig. 2 shows the cold-formed power storage device packaging material 10.

A secondary battery 20, which is a single-sided battery, can be produced, for example, through the following steps S21 to S28. The secondary battery 20 produced through these steps can be firmly adhered and fixed to an electrical device via a double-sided tape having high adhesion (PSA tape).

Step S21: Preparing the power storage device packaging material 10, a battery element 1 including electrodes, and leads 2 extending from the electrodes.

Step S22: Cold-forming a recess 10a for accommodating the battery element 1 on one surface of the power storage device packaging material 10 (see Figs. 3 (a) and 3 (b)).

Step S23: Placing the battery element 1 in the recess 10a of the power storage device packaging material 10 on which the recess 10a is formed, folding back the power storage device packaging material 10 to cover the recess 10a with a cover portion 10b, and pressure heat-sealing one side of the power storage device packaging material 10 to sandwich the leads 2 extending from the battery element 1 (see Figs. 3 (b) and 3 (c)).

Step S24: Adhering a protective film to the power storage device packaging material 10.

Step S25: Pressure heat-sealing another side of the power storage device packaging material 10 while leaving one side other than the side sandwiching the leads 2 unsealed, followed by injecting an electrolyte from the unsealed side and pressure heat-sealing the unsealed side in a vacuum to produce the battery 20 (see Fig. 3 (c)).

Step S26: Setting conditions such as a current value, a voltage value, and an environmental temperature to predetermined values and performing charge and discharge to cause a chemical change.

Step S27: Peeling off the protective film from the power storage device packaging material 10.

Step S28: Trimming the ends of the pressure heat-sealed sides other than the side sandwiching the leads 2, and bending the end portions toward the recess 10a (Fig. 3 (d)).

### [Examples]

The present disclosure will be described by way of examples and comparative examples. For convenience of description, the examples and the comparative examples are not distinguished from each other and are both referred to as experimental examples.

The experimental examples can be divided into first to twenty-first experimental example groups. Thus, each of the experimental example groups will be described and discussed, and finally the discussions on the experimental examples will be summarized.

In all the experimental examples, a nylon film was used as the substrate layer 11. As the metal foil layer 14, aluminum having a thickness of 35 µm and provided with the anticorrosion treatment layers 15a and 15b on both surfaces thereof was used. As the sealant layer 17, a polypropylene film having a thickness of 35 µm was used. The substrate protective layer 12 will be described later.

First, the substrate layer 11 was bonded to the metal foil layer 14 by using a heat-sensitive adhesive (step S12).

Next, the substrate protective layer 12 was applied and formed on a surface of the substrate layer 11 (step S13).

Next, the sealant adhesive layer 16 and the sealant layer 17 were formed by co-extrusion on the metal foil layer 14, thereby producing the power storage device packaging material 10 (step S14).

Prior to the description of the substrate protective layer 12 of the experimental examples, an evaluation method for the experimental examples will be described. The experimental examples were evaluated from the following four viewpoints.

### <Evaluation method>

### (Appearance of coating film)

After the substrate protective layer 12 was applied and formed (step S13), an appearance of the substrate protective layer 12 was observed with the naked eye. Then, a substrate protective layer 12 observed to have a matte appearance that was uniform and dense without roughness was evaluated as "A", and the substrate protective layer 12 having a smooth appearance and the substrate protective layer 12 having an appearance with roughness were evaluated as "F".

### (PSA adhesion)

In the obtained packaging material, a double-sided tape having high adhesion was attached to the sealant layer 17, and the sealant layer 17 was bonded to a metal plate via the double-sided tape. Next, a PSA tape having a width of 10 mm was attached onto the substrate protective layer 12, and an aluminum foil was bonded to the substrate protective layer 12 via the PSA tape. The packaging material was left to stand at room temperature for 2 hours, followed by 180-degree peeling at a speed of 300 mm/min using a tensile tester, and a peeling strength between the substrate protective layer 12 and the PSA tape was measured.

A packaging material in which the peeling strength was 5 N/10 mm or more was evaluated as "A", a packaging material in which the peeling strength was 2.5 N/10 mm or more and less than 5 N/10 mm was evaluated as "B", and a packaging material in which the peeling strength was less than 2.5 N/10 mm was evaluated as "F".

### (Protective film adhesive residue)

A double-sided tape having high adhesion was attached to the sealant layer 17 of the obtained packaging material 10, and the sealant layer 17 was bonded to a metal plate via the double-sided tape. Next, a protective film having low adhesion was bonded to the substrate protective layer 12. The packaging material 10 was stored at a temperature of 85°C for 6 hours and allowed to cool to room temperature, followed by 180-degree peeling between the substrate protective layer 12 and the protective film at a speed of 300 mm/min using a tensile tester. Then, it was checked whether a pressure-sensitive adhesive of the protective film remained on the surface of the substrate protective layer 12. A packaging material 10 in which no pressure-sensitive adhesive residue was observed was evaluated as "A", and a packaging material 10 in which a pressure-sensitive adhesive residue was observed was evaluated as "F".

### (Appearance after forming)

The recess 10a was cold-formed in the power storage device packaging material 10 (step S22). The recess 10a had a depth of 3.5 mm. Then, the power storage device packaging material 10 was observed with the naked eye, and evaluated for the presence or absence of cracks and a change in gloss in the substrate protective layer 12. A packaging material 10 in which no cracks occurred and the gloss before cold forming was maintained in the substrate protective layer 12 was evaluated as "A". A packaging material 10 in which no cracks occurred but a change in gloss occurred in the substrate protective layer 12, thus causing part of the substrate protective layer 12 to have a shine (an increase in gloss) was evaluated as "B". A packaging material 10 in which cracks occurred in the substrate protective layer 12 was evaluated as "F".

### (Thickness)

In the obtained packaging material 10, the thickness of the substrate protective layer 12 was measured by using a contact-type thickness measuring device (trade name: PEACOCK, manufactured by Ozaki Mfg. Co., Ltd.). A difference between the thickness of the obtained packaging material 10 and the thickness of a packaging material sample including no substrate protective layer 12 was determined as the thickness of the substrate protective layer 12.

### <First experimental example group and discussion thereof>

The first experimental example group was composed of Experimental Examples 1-1 to 1-5. In this experimental example group, a polyester polyol was used as the base resin, and hexamethylene diisocyanate (HDI) and isophorone diisocyanate (IPDI) were used as the hardener. HDI is an aliphatic polyisocyanate, and IPDI is an alicyclic polyisocyanate. The amount ratio of HDI and IPDI (HDI : IPDI) was 9 : 1 in mass ratio.

In this experimental example group, as the large filler, silica particles having an average particle size of 15 µm were used, and the substrate protective layer 12 contained 10 mass% of silica particles as the large filler.

In this experimental example group, as the small filler, silica particles were used, and the substrate protective layer 12 contained 20 mass% of silica particles as the small filler.

In the experimental examples, small fillers having different average particle sizes were used, and a relationship of the average particle size of the small filler with each of the above evaluation items was examined. The results are shown in Table 1.

**[Table 1]**

| Experimenta 1 Example | Resin composition | | Large filler | | | Small filler | | | Total amount of fillers (mass% ) | Appearanc e of coating film | PSA adhesio n | Protectiv e film adhesive residue | Appearanc e after forming | Thicknes s (µm) |
|---|---|---|---|---|---|---|---|---|---|---|---|---|---|---|
| | Base resin | Hardener | Materia 1 | Particl e size (µm) | Amount (mass% ) | Materia 1 | Particl e size (µm) | Amount (mass% ) | | | | | | |
| Experimenta 1 Example 1-1 | Polyeste r polyol | HDI+IPD I | Silica | 15 | 10 | Silica | 5 | 20 | 30 | A | A | A | A | 14 |
| Experimenta 1 Example 1-2 | | | | | | | 3 | | | A | A | A | A | 14 |
| Experimenta 1 Example 1-3 | | | | | | | 1 | | | A | A | A | A | 14 |
| Experimenta 1 Example 1-4 | | | | | | | 0.1 | | | F | F | A | A | 14 |
| Experimenta 1 Example 1-5 | | | | | | | 10 | | | F | A | A | A | 14 |

### (Appearance of coating film)

From the results, it was found that under the above conditions, when the average particle size of the small filler is 1 to 5 µm, it was possible to form a substrate protective layer having a matte appearance that was uniform and dense without roughness. In Experimental Example 1-4, the average particle size of the small filler was smaller than this value; thus, the surface of the substrate protective layer had only a small unevenness and did not have a matte appearance. In Experimental Example 1-5, the surface of the substrate protective layer had a matte appearance; however, due to the large average particle size of the small filler, the surface of the substrate protective layer had a large unevenness and did not have a matte appearance that was uniform and dense.

### (PSA adhesion)

From the results, it is found that under the above conditions, when the average particle size of the small filler is 1 µm or more, the PSA tape is firmly adhered to the substrate protective layer 12.

### (Protective film adhesive residue)

It is found that under the above conditions, the average particle size of the small filler is unrelated to the protective film adhesive residue, and no adhesive residue is generated for any of the average particle sizes.

### (Appearance after forming)

It is found that under the above conditions, the average particle size of the small filler is unrelated to the appearance after forming, and no cracks or change in gloss occur in the substrate protective layer for any of the average particle sizes.

### <Second experimental example group and discussion thereof>

The second experimental example group was composed of Experimental Example 2-1. In the second experimental example group, the large filler having a small average particle size was used, and a relationship of the average particle size of the large filler with each of the evaluation items was examined by comparing with the first experimental example group. Specifically, in Experimental Example 2-1, the large filler having an average particle size of 5 µm was used, and except for this, the power storage device packaging material 10 was produced in the same manner as in Experimental Example 1-2. Then, each of the evaluation items was examined. The results are shown in Table 2.

**[Table 2]**

| Experimenta 1 Example | Resin composition | | Large filler | | | Small filler | | | Total amount of fillers (mass% ) | Appearanc e of coating film | PSA adhesio n | Protectiv e film adhesive residue | Appearanc e after forming | Thicknes s (µm) |
|---|---|---|---|---|---|---|---|---|---|---|---|---|---|---|
| | Base resin | Hardener | Materia 1 | Particl e size (µm) | Amount (mass% ) | Materia 1 | Particl e size (µm) | Amount (mass% ) | | | | | | |
| Experimenta 1 Example 2-1 | Polyeste r polyol | HDI+IPD I | Silica | 5 | 10 | Silica | 3 | 20 | 30 | A | A | F | A | 5 |

### (Appearance of coating film)

From the results, it is found that when the average particle size of the large filler is 5 µm, the appearance of the coating film is unchanged. That is, as in Experimental Example 1-2, it is possible to form a substrate protective layer having a matte appearance that is uniform and dense without roughness.

### (PSA adhesion)

It is found that when the average particle size of the large filler is 5 µm, as in Experimental Example 1-2, the PSA tape is firmly adhered to the substrate protective layer 12.

### (Protective film adhesive residue)

When the large filler has a small average particle size, specifically, an average particle size of 5 µm, unlike in Experimental Example 1-2, the pressure-sensitive adhesive of the protective film remains on the surface of the substrate protective layer 12. Thus, it is found that the average particle size of the large filler is related to the protective film adhesive residue, and under the above conditions, in order to prevent the adhesive residue from remaining, the average particle size of the large filler should be 15 µm (Experimental Example 1-3).

### (Appearance after forming)

It is found that when the average particle size of the large filler is 5 µm, as in Experimental Example 1-2, no cracks or change in gloss occurs in the substrate protective layer.

### <Third experimental example group and discussion thereof>

In the first experimental example group in which the large filler having an average particle size of 15 µm was used, no protective film adhesive residue was generated, and in the second experimental example group in which the large filler having an average particle size of 5 µm was used, the protective film adhesive residue was generated. Thus, in the third experimental example group, the large filler having an average particle size between the two values was used, and a relationship of the average particle size of the large filler with each of the evaluation items was examined. Specifically, in the third experimental example group, the large filler having an average particle size of 10 µm was used.

In addition, in the experimental examples, small fillers having different average particle sizes were used, and a relationship of the average particle size of the small filler with each of the evaluation items was examined in the case where the large filler having an average particle size of 10 µm was used.

In the first experimental example group, in the case where the average particle size of the small filler was 0.1 µm (Experimental Example 1-4) and in the case where the average particle size of the small filler was 10 µm (Experimental Example 1-5), one or both of the appearance of the coating film and the PSA adhesion were evaluated as poor. Thus, the small fillers having the above average particle sizes were not used, and the power storage device packaging material 10 was produced by using the small filler having an average particle size of 5 µm (Experimental Example 3-1), the small filler having an average particle size of 3 µm (Experimental Example 3-2), and the small filler having an average particle size of 1 µm (Experimental Example 3-3). Then, each of the evaluation items was examined. The results are shown in Table 3.

**[Table 3]**

| Experimenta 1 Example | Resin composition | | Large filler | | | Small filler | | | Total amount of fillers (mass% ) | Appearanc e of coating film | PSA adhesio n | Protectiv e film adhesive residue | Appearanc e after forming | Thicknes s (µm) |
|---|---|---|---|---|---|---|---|---|---|---|---|---|---|---|
| | Base resin | Hardener | Materia 1 | Particl e size (µm) | Amount (mass% ) | Materia 1 | Particl e size (µm) | Amount (mass% ) | | | | | | |
| Experimenta 1 Example 3-1 | Polyeste r polyol | HDI+IPD I | Silica | 10 | 10 | Silica | 5 | 20 | 30 | A | A | A | A | 9 |
| Experimenta 1 Example 3-2 | | | | | | | 3 | | | A | A | A | A | 9 |
| Experimenta 1 Example 3-3 | | | | | | | 1 | | | A | A | A | A | 9 |

### (Appearance of coating film)

From the results, it is found that when the average particle size of the large filler is 10 µm, the appearance of the coating film is unchanged, and as in the first experimental example group, it is possible to form a substrate protective layer having a matte appearance that is uniform and dense without roughness. Furthermore, the average particle size of the small filler is unrelated to the appearance of the coating film.

### (PSA adhesion)

It is found that when the average particle size of the large filler is 10 µm, as in the first experimental example group, the PSA tape is firmly adhered to the substrate protective layer 12. The average particle size of the small filler is unrelated to the PSA adhesion.

### (Protective film adhesive residue)

When the average particle size of the large filler is 10 µm, no adhesive residue is generated. The average particle size of the small filler is unrelated to the protective film adhesive residue.

Considering the results of the third experimental example group in addition to the results of the first and second experimental example groups, it is found that in order to prevent the adhesive residue, the average particle size of the large filler should be 10 µm or more.

### (Appearance after forming)

It is found that when the average particle size of the large filler is 10 µm, as in the first experimental example group, no cracks or change in gloss occur in the substrate protective layer. The average particle size of the small filler is unrelated to the appearance after forming.

### <Fourth experimental example group and discussion thereof>

In the fourth experimental example group, the large filler having a large average particle size was used, and a relationship of the average particle size of the large filler with each of the evaluation items was examined. Specifically, in the fourth experimental example group, the large filler having an average particle size of 30 µm was used.

In addition, in the experimental examples, small fillers having different average particle sizes were used, and a relationship of the average particle size of the small filler with each of the evaluation items was examined in the case where the large filler having an average particle size of 30 µm was used. The average particle sizes of the small fillers were 5 µm (Experimental Example 4-1), 3 µm (Experimental Example 4-2), and 1 µm (Experimental Example 4-3).

The results of the evaluation items are shown in Table 4.

**[Table 4]**

| Experimenta 1 Example | Resin composition | | Large filler | | | Small filler | | | Total amount of fillers (mass% ) | Appearanc e of coating film | PSA adhesio n | Protectiv e film adhesive residue | Appearanc e after forming | Thicknes s (µm) |
|---|---|---|---|---|---|---|---|---|---|---|---|---|---|---|
| | Base resin | Hardener | Materia 1 | Particl e size (µm) | Amount (mass% ) | Materia 1 | Particl e size (µm) | Amount (mass% ) | | | | | | |
| Experimenta 1 Example 4-1 | Polyeste r polyol | HDI+IPD I | Silica | 30 | 10 | Silica | 5 | 20 | 30 | A | A | A | A | 29 |
| Experimenta 1 Example 4-2 | | | | | | | 3 | | | A | A | A | A | 29 |
| Experimenta 1 Example 4-3 | | | | | | | 1 | | | A | A | A | A | 29 |

### (Appearance of coating film)

From the results, it is found that when the average particle size of the large filler is 30 µm, the appearance of the coating film is unchanged, and as in the first experimental example group, it is possible to form a substrate protective layer having a matte appearance that is uniform and dense without roughness. The average particle size of the small filler is unrelated to the appearance of the coating film.

### (PSA adhesion)

It is found that when the average particle size of the large filler is 30 µm, as in the first experimental example group, the PSA tape is firmly adhered to the substrate protective layer 12. The average particle size of the small filler is unrelated to the PSA adhesion.

### (Protective film adhesive residue)

When the average particle size of the large filler is 30 µm, no adhesive residue is generated. The average particle size of the small filler is unrelated to the protective film adhesive residue.

### (Appearance after forming)

It is found that when the average particle size of the large filler is 30 µm, as in the first experimental example group, no cracks or change in gloss occur in the substrate protective layer. The average particle size of the small filler is unrelated to the appearance after forming.

### <Fifth experimental example group and discussion thereof>

In the fifth experimental example group, a large filler having a larger average particle size was used, and a relationship of the average particle size of the large filler with each of the evaluation items was examined. Specifically, in the fifth experimental example group, the large filler having an average particle size of 50 µm was used.

The fifth experimental example group was composed of Experimental Example 5-1. Thus, in Experimental Example 5-1, a large filler having an average particle size of 50 µm was used, and except for this, the power storage device packaging material 10 was produced in the same manner as in Experimental Example 1-2. Then, each of the evaluation items was examined. The results are shown in Table 5.

**[Table 5]**

| Experimenta 1 Example | Resin composition | | Large filler | | | Small filler | | | Total amount of fillers (mass% ) | Appearanc e of coating film | PSA adhesio n | Protectiv e film adhesive residue | Appearanc e after forming | Thicknes s (µm) |
|---|---|---|---|---|---|---|---|---|---|---|---|---|---|---|
| | Base resin | Hardener | Materia 1 | Particl e size (µm) | Amount (mass% ) | Materia 1 | Particl e size (µm) | Amount (mass% ) | | | | | | |
| Experimenta 1 Example 5-1 | Polyeste r polyol | HDI+IPD I | Silica | 50 | 10 | Silica | 3 | 20 | 30 | F | A | A | A | 48 |

### (Appearance of coating film)

From the results, it is found that when the average particle size of the large filler is 50 µm, it is impossible to form a substrate protective layer having a matte appearance that is uniform and dense without roughness. Specifically, due to the large average particle size of the large filler, the surface of the substrate protective layer had a matte appearance with roughness.

Thus, it has been found that in order to form a substrate protective layer having a matte appearance that is uniform and dense without roughness, in addition to the fact that the average particle size of the small filler should be 1 to 5 µm (see the discussion on the first experimental example group), the average particle size of the large filler should be 30 µm or less.

### (PSA adhesion)

It is found that when the average particle size of the large filler is 50 µm, as in Experimental Example 1-2, the PSA tape is firmly adhered to the substrate protective layer 12.

### (Protective film adhesive residue)

When the average particle size of the large filler is 50 µm, as in Experimental Example 1-2, no adhesive residue is generated.

### (Appearance after forming)

It is found that when the average particle size of the large filler is 50 µm, as in Experimental Example 1-2, no cracks or change in gloss occurs in the substrate protective layer.

### <Sixth experimental example group and discussion thereof>

In the sixth experimental example group, the amount of large filler was varied, and a relationship of the amount of large filler with each of the evaluation items was examined. Specifically, in the sixth experimental example group, the amounts of large fillers contained in the substrate protective layer were 1 mass% (Experimental Example 6-1), 3 mass% (Experimental Example 6-2), 25 mass% (Experimental Example 6-3), and 30 mass% (Experimental Example 6-4), and except for this, the power storage device packaging material 10 was produced in the same manner as in Experimental Example 1-2. Then, each of the evaluation items was examined. The results are shown in Table 6.

**[Table 6]**

| Experimenta 1 Example | Resin composition | | Large filler | | | Small filler | | | Total amount of fillers (mass% ) | Appearanc e of coating film | PSA adhesio n | Protectiv e film adhesive residue | Appearanc e after forming | Thicknes s (µm) |
|---|---|---|---|---|---|---|---|---|---|---|---|---|---|---|
| | Base resin | Hardener | Materia 1 | Particl e size (µm) | Amount (mass% ) | Materia 1 | Particl e size (µm) | Amount (mass% ) | | | | | | |
| Experimenta 1 Example 6-1 | Polyeste r polyol | HDI+IPD I | Silica | 15 | 1 | Silica | 3 | 20 | 21 | A | A | F | A | 10 |
| Experimenta 1 Example 6-2 | | | | | 3 | | | | 23 | A | A | A | A | 13 |
| Experimenta 1 Example 6-3 | | | | | 25 | | | | 45 | A | A | A | A | 14 |
| Experimenta 1 Example 6-4 | | | | | 30 | | | | 50 | F | A | A | A | 15 |

### (Appearance of coating film)

In Experimental Example 6-4, due to the excessively large amount of large filler, the surface of the substrate protective layer had a matte appearance with roughness. From the results, it has been found that in addition to the fact that the average particle size of the small filler should be 1 to 5 µm and the average particle size of the large filler should be 30 µm or less (see the discussions on the first and fifth experimental example groups), the amount of large filler should be 25 mass% or less.

### (PSA adhesion)

It is found that when the amount of large filler is in the range of 1 to 30 mass%, as in Experimental Example 1-2, the PSA tape is firmly adhered to the substrate protective layer 12.

### (Protective film adhesive residue)

In Experimental Example 6-4, due to the excessively small amount of large filler, the pressure-sensitive adhesive of the protective film remained on the surface of the substrate protective layer 12. From the results, it has been found that in order to prevent the pressure-sensitive adhesive residue from remaining on the protective film, in addition to the fact that the average particle size of the large filler should be 10 µm or more (see the discussion on the third experimental example group), the amount of large filler should be 3 mass% or more.

### (Appearance after forming)

It is found that when the amount of large filler is in the range of 1 to 30 mass%, as in Experimental Example 1-2, no cracks or change in gloss occurs in the substrate protective layer.

### <Seventh experimental example group and discussion thereof>

In the seventh experimental example group, the amount of large filler was set to 30 mass% and the amount of small filler was varied, and a relationship of the total amount of large filler and small filler with each of the evaluation items was examined.

In this experimental example group, although the average particle size of the large filler was also varied, the average particle sizes were 10 µm and 15 µm, and as can be seen from the discussions on the first to sixth experimental example groups described above, such a difference in the average particle size does not affect the results of the evaluation items.

As the eighth and ninth experimental example groups, experimental examples will be described later in which a relationship of the total amount with each of the evaluation items was examined when the amount of large filler was set to be less than 30 mass% and the amount of small filler was varied.

Specifically, in Experimental Example 7-1, a large filler having an average particle size of 15 µm was used, the amount of large filler was 30 mass%, and the amount of small filler was 30 mass%. The total amount was 60 mass%. Except for this, the power storage device packaging material 10 was produced in the same manner as in Experimental Example 1-2.

In Experimental Example 7-2, a large filler having an average particle size of 10 µm was used, the amount of large filler was 20 mass%, and the amount of small filler was 30 mass%. The total amount was 50 mass%.

The results of the evaluation items are shown in Table 7.

**[Table 7]**

| Experimenta 1 Example | Resin composition | | Large filler | | | Small filler | | | Total amount of fillers (mass% ) | Appearanc e of coating film | PSA adhesio n | Protectiv e film adhesive residue | Appearanc e after forming | Thicknes s (µm) |
|---|---|---|---|---|---|---|---|---|---|---|---|---|---|---|
| | Base resin | Hardener | Materia 1 | Particl e size (µm) | Amount (mass% ) | Materia 1 | Particl e size (µm) | Amount (mass% ) | | | | | | |
| Experimenta 1 Example 7-1 | Polyeste r polyol | HDI+IPD I | Silica | 15 | 30 | Silica | 3 | 30 | 60 | F | A | A | F | 15 |
| Experimenta 1 Example 7-2 | | | | 10 | | | | 20 | 50 | F | A | A | A | 10 |

### (Appearance of coating film)

In both of Experimental Examples 7-1 and 7-2, due to the excessively large amount of large filler, the surface of the substrate protective layer had a matte appearance with roughness. The relationship between the total amount and the appearance of the coating film cannot be evaluated in this experimental example group.

### (PSA adhesion)

It is found that when the total amount is 50 to 60 mass%, as in Experimental Example 1-2, the PSA tape is firmly adhered to the substrate protective layer 12.

### (Protective film adhesive residue)

It is found that when the total amount is 50 to 60 mass%, as in Experimental Example 1-2, no pressure-sensitive adhesive residue remains on the protective film is generated.

### (Appearance after forming)

In Experimental Example 7-1, in which the amount of small filler was 30 mass% and the total amount was 60 mass%, cracks occurred in the substrate protective layer after cold forming. It is unclear from the seventh experimental example group whether the reason for the occurrence of cracks lies in the excessively large amount of small filler or in the excessively large total amount. However, considering this together with the eighth and ninth experimental example groups described next, it is found that the cause of the poor appearance after forming mainly lies in the total amount.

### <Eighth experimental example group and discussion thereof>

In the eighth experimental example group, the average particle size of the large filler was set to 15 µm, the amount of large filler was set to 3 mass%, and the amount of small filler was varied, and a relationship of the total amount of large filler and small filler with each of the evaluation items was examined. Except for this, the power storage device packaging material 10 was produced in the same manner as in Experimental Example 1-2.

The results of the evaluation items are shown in Table 8.

**[Table 8]**

| Experimenta 1 Example | Resin composition | | Large filler | | | Small filler | | | Total amount of fillers (mass% ) | Appearanc e of coating film | PSA adhesio n | Protectiv e film adhesive residue | Appearanc e after forming | Thicknes s (µm) |
|---|---|---|---|---|---|---|---|---|---|---|---|---|---|---|
| | Base resin | Hardener | Materia 1 | Particl e size (µm) | Amount (mass% ) | Materia 1 | Particl e size (µm) | Amount (mass% ) | | | | | | |
| Experimenta 1 Example 8-1 | Polyeste r polyol | HDI+IPD I | Silica | 15 | 3 | Silica | 3 | 2 | 5 | F | F | A | F | 13 |
| Experimenta 1 Example 8-2 | | | | | | | | 5 | 8 | A | A | A | A | 13 |
| Experimenta 1 Example 8-3 | | | | | | | | 10 | 13 | A | A | A | A | 13 |
| Experimenta 1 Example 8-4 | | | | | | | | 20 | 23 | A | A | A | A | 13 |
| Experimenta 1 Example 8-5 | | | | | | | | 45 | 48 | A | A | A | A | 13 |
| Experimenta 1 Example 8-6 | | | | | | | | 50 | 53 | A | A | A | F | 13 |

### (Appearance of coating film)

In Experimental Example 8-1, due to the small amount of small filler (2 mass%) and the small total amount (5 mass%), the substrate protective layer 12 did not have a matte appearance that was uniform and dense, and had a smooth appearance. In the experimental examples in which the amount of small filler was 5 mass% or more and the total amount was 8 mass% or more, the substrate protective layer 12 had a matte appearance that was uniform and dense without roughness. Thus, it is found that in order for the substrate protective layer 12 to have a matte appearance that is uniform and dense, the amount of small filler should be 5 mass% or more and the total amount should be 8 mass% or more. It is unclear from this experimental example group whether the cause of the smooth appearance of the substrate protective layer 12 lies in the amount of small filler or in the total amount.

### (PSA adhesion)

Similarly, in Experimental Example 8-1, due to the small amount of small filler (2 mass%) and the small total amount (5 mass%), the PSA tape was not firmly adhered to the substrate protective layer 12. In the experimental examples in which the amount of small filler was 5 mass% or more and the total amount was 8 mass% or more, the peeling strength was high. Thus, it is found that in order for the PSA tape to be firmly adhered to the substrate protective layer 12, in addition to the fact that the average particle size of the small filler should be 1 µm or more (see the discussion on the first experimental example group), the amount of small filler should be 5 mass% or more and the total amount should be 8 mass% or more. It is unclear from this experimental example group whether the cause of the poor adhesion of the PSA tape lies in the amount of small filler or in the total amount.

### (Protective film adhesive residue)

It is found that when the total amount is 2 to 53 mass%, no pressure-sensitive adhesive residue of the protective film is generated.

### (Appearance after forming)

In Experimental Example 8-6, in which the amount of small filler was 50 mass% and the total amount was 53 mass%, cracks occurred in the substrate protective layer after cold forming. It is unclear from the eighth experimental example group whether the reason for the occurrence of cracks lies in the excessively large amount of small filler or in the excessively large total amount.

### <Ninth experimental example group and discussion thereof>

In the ninth experimental example group, the average particle size of the large filler was set to 15 µm, the amount of large filler was set to 25 mass%, and the amount of small filler was varied, and a relationship of the total amount of large filler and small filler with each of the evaluation items was examined. Except for this, the power storage device packaging material 10 was produced in the same manner as in Experimental Example 1-2.

The results of the evaluation items are shown in Table 9.

**[Table 9]**

| Experimenta 1 Example | Resin composition | | Large filler | | | Small filler | | | Total amount of fillers (mass% ) | Appearanc e of coating film | PSA adhesio n | Protectiv e film adhesive residue | Appearanc e after forming | Thicknes s (µm) |
|---|---|---|---|---|---|---|---|---|---|---|---|---|---|---|
| | Base resin | Hardener | Materia 1 | Particl e size (µm) | Amount (mass% ) | Materia 1 | Particl e size (µm) | Amount (mass% ) | | | | | | |
| Experimenta 1 Example 9-1 | Polyeste r polyol | HDI+IPD I | Silica | 15 | 25 | Silica | 3 | 2 | 27 | F | F | A | A | 14 |
| Experimenta 1 Example 9-2 | | | | | | | | 5 | 30 | A | A | A | A | 14 |
| Experimenta 1 Example 9-3 | | | | | | | | 10 | 35 | A | A | A | A | 14 |
| Experimenta 1 Example 9-4 | | | | | | | | 20 | 45 | A | A | A | A | 14 |
| Experimenta 1 Example 9-5 | | | | | | | | 25 | 50 | A | A | A | A | 14 |
| Experimenta 1 Example 9-6 | | | | | | | | 45 | 70 | A | A | A | F | 14 |
| Experimenta 1 Example 9-7 | | | | | | | | 50 | 75 | A | A | A | F | 14 |

### (Appearance of coating film)

In Experimental Example 9-1, due to the small amount of small filler (2 mass%), the substrate protective layer 12 did not have a matte appearance that was uniform and dense, and had a smooth appearance. In Experimental Example 9-1, the total amount was 27 mass%; thus, considering this together with the eighth experimental example group described above, it can be assumed that the cause of the smooth appearance of the substrate protective layer 12 mainly lies in the amount of small filler.

On the other hand, in the experimental examples in which the amount of small filler was 5 mass% or more, the substrate protective layer 12 had a matte appearance that was uniform and dense without roughness. Thus, it can be assumed that the amount of small filler should be 5 mass% or more.

### (PSA adhesion)

Similarly, in Experimental Example 9-1, due to the small amount of small filler (2 mass%), the PSA tape was not firmly adhered to the substrate protective layer 12. It can be assumed that the cause of the poor adhesion of the PSA tape mainly lies in the amount of small filler.

In the experimental examples in which the amount of small filler was 5 mass% or more, the peeling strength was high. Thus, it can be assumed that in order for the PSA tape to be firmly adhered to the substrate protective layer 12, in addition to the fact that the average particle size of the small filler should be 1 µm or more (see the discussion on the first experimental example group), the amount of small filler should be 5 mass% or more.

### (Protective film adhesive residue)

It is found that when the total amount is 27 to 75 mass%, no pressure-sensitive adhesive residue remaining on the protective film is generated. Considering this together with the eighth experimental example group described above, it is considered that the total amount is not closely related to the pressure-sensitive adhesive residue remaining on the protective film.

### (Appearance after forming)

In Experimental Example 9-6, in which the amount of small filler was 45 mass% and the total amount was 70 mass%, cracks occurred in the substrate protective layer after cold forming. In Experimental Example 8-5 described above, although the amount of small filler was 45 mass%, no cracks or change in gloss occurred in the substrate protective layer. Thus, it is found that the cause of the cracks lies in the total amount.

In the experimental examples in which the total amount was 50 mass% or less, no cracks or change in gloss occurred. Thus, it is found that in order to obtain a good appearance after forming, the total amount of large filler and small filler should be 50 mass% or less.

### <Tenth experimental example group and discussion thereof>

In the tenth experimental example group, the polyisocyanate component of the curable resin was varied, and a relationship of the type of polyisocyanate component with each of the evaluation items was examined. Except for this, the power storage device packaging material 10 was produced in the same manner as in Experimental Example 1-1. In Experimental Example 10-1, the amount ratio of tolylene diisocyanate (TDI) and IPDI (TDI : IPDI) was 9 : 1 in mass ratio.

The results of the evaluation items are shown in Table 10.

**[Table 10]**

| Experimenta 1 Example | Resin composition | | Large filler | | | Small filler | | | Total amount of fillers (mass% ) | Appearanc e of coating film | PSA adhesio n | Protectiv e film adhesive residue | Appearanc e after forming | Thicknes s (µm) |
|---|---|---|---|---|---|---|---|---|---|---|---|---|---|---|
| | Base resin | Hardener | Materia 1 | Particl e size (µm) | Amount (mass% ) | Materia 1 | Particl e size (µm) | Amount (mass% ) | | | | | | |
| Experimenta 1 Example 10-1 | Polyeste r polyol | TDI+IPD I | Silica | 15 | 10 | Silica | 5 | 20 | 30 | A | A | A | A | 14 |
| Experimenta 1 Example 10-2 | | HDI | | | | | | | | A | B | A | A | 14 |
| Experimenta 1 Example 10-3 | | IPDI | | | | | | | | A | A | A | F | 14 |
| Experimenta 1 Example 10-4 | | TDI | | | | | | | | A | B | A | A | 14 |

### (Appearance of coating film)

As can be seen from the results, the appearance of the coating film does not depend on the type of polyisocyanate component.

### (PSA adhesion)

In Experimental Example 10-2, in which only an aliphatic polyisocyanate (HDI) was used as the polyisocyanate component, and Experimental Example 10-4, in which only an aromatic polyisocyanate (TDI) was used as the polyisocyanate component, the PSA tape was observed to have a lower peeling strength. The PSA tape was not firmly adhered to the substrate protective layer 12. On the other hand, in Experimental Examples 10-1 and 10-3, in which an alicyclic polyisocyanate (IPDI) was used as at least part of the polyisocyanate component, the peeling strength was high. Thus, it is found that in order for the PSA tape to be firmly adhered to the substrate protective layer 12, in addition to the fact that the average particle size of the small filler should be 1 µm or more and the amount of small filler should be 5 mass% or more (see the discussions on the first and ninth experimental example groups), it is important to use an alicyclic polyisocyanate as at least part of the polyisocyanate component.

### (Protective film adhesive residue)

It is found that the pressure-sensitive adhesive residue remaining on the protective film does not depend on the type of polyisocyanate component.

### (Appearance after forming)

In Experimental Example 10-3, in which only the alicyclic polyisocyanate (IPDI) was used as the polyisocyanate component, cracks occurred in the substrate protective layer after cold forming. On the other hand, in Experimental Examples 1-1, 1-2, and 1-4, in which the aliphatic polyisocyanate (HDI) or the aromatic polyisocyanate (TDI) was used as at least part of the polyisocyanate component, no cracks or change in gloss occurred in the substrate protective layer. Thus, it is found that in order to obtain a good appearance after forming, an aliphatic polyisocyanate or an aromatic polyisocyanate should be used as at least part of the polyisocyanate component.

### <Eleventh experimental example group and discussion thereof>

In the eleventh experimental example group, the material of the large filler and the material of the small filler were varied, and a relationship of the materials of the fillers with each of the evaluation items was examined. Except for this, the power storage device packaging material 10 was produced in the same manner as in Experimental Example 1-1. In Experimental Example 11-1, organic particles (urethane particles) were used as the large filler and the small filler. In Experimental Example 11-2, inorganic particles (silica particles) were used as the large filler, and organic particles (urethane particles) were used as the small filler. On the other hand, in Experimental Example 11-3, organic particles (urethane particles) were used as the large filler, and inorganic particles (silica particles) were used as the small filler.

The results of the evaluation items are shown in Table 11.

**[Table 11]**

| Experiment al Example | Resin composition | | Large filler | | | Small filler | | | Total amount of fillers (mass% ) | Appearanc e of coating film | PSA adhesio n | Protectiv e film adhesive residue | Appearanc e after forming | Thicknes s (µm) |
|---|---|---|---|---|---|---|---|---|---|---|---|---|---|---|
| | Base resin | Hardener | Material | Particl e size (µm) | Amount (mass% ) | Material | Particl e size (µm) | Amount (mass% ) | | | | | | |
| Experiment al Example 11-1 | Polyeste r polyol | HDI+IPD I | Urethan e | 15 | 10 | Urethan e | 5 | 20 | 30 | A | A | A | B | 13 |
| Experiment al Example 11-2 | | | Silica | | | | | | | A | A | A | A | 14 |
| Experiment al Example 11-3 | | | Urethan e | | | Silica | | | | A | A | A | B | 13 |

### (Appearance of coating film)

As can be seen from the results, the appearance of the coating film does not depend on the materials of the fillers.

### (PSA adhesion)

The adhesive force of the PSA tape does not significantly vary depending on the materials of the fillers.

### (Protective film adhesive residue)

The pressure-sensitive adhesive residue remaining on the protective film does not depend on the materials of the fillers.

### (Appearance after forming)

In Experimental Examples 11-1 and 11-3, in which the organic particles (urethane particles) were used as the large filler, the large filler was deformed during cold forming, and the substrate protective layer 12 had a gloss (shine). On the other hand, in Experimental Example 11-2 and the experimental example group 1 described above, in which the inorganic particles (silica particles) were used as the large filler, the substrate protective layer 12 did not have such a gloss (shine).

Thus, it is found that in order to prevent a change in gloss by cold forming, inorganic particles should be used as the large filler.

### <Twelfth to twenty-first experimental example groups and discussion thereof>

In the twelfth to twenty-first experimental example groups, the first to eleventh experimental example groups were repeated by using an acrylic polyol having a glass transition point of 50 to 60°C as the polyol component of the curable resin. The results of the evaluation items are shown in Tables 12 to 21.

**[Table 12]**

| Experimenta 1 Example | Resin composition | | Large filler | | | Small filler | | | Total amount of fillers (mass% ) | Appearanc e of coating film | PSA adhesio n | Protectiv e film adhesive residue | Appearanc e after forming | Thicknes s (µm) |
|---|---|---|---|---|---|---|---|---|---|---|---|---|---|---|
| | Base resin | Hardener | Materia 1 | Particl e size (µm) | Amount (mass% ) | Materia 1 | Particl e size (µm) | Amount (mass% ) | | | | | | |
| Experimenta 1 Example 12-1 | Acryli c polyol | HDI+IPD I | Silica | 15 | 10 | Silica | 5 | 20 | 30 | A | A | A | A | 14 |
| Experimenta 1 Example 12-2 | | | | | | | 3 | | | A | A | A | A | 14 |
| Experimenta 1 Example 12-3 | | | | | | | 1 | | | A | A | A | A | 14 |
| Experimenta 1 Example 12-4 | | | | | | | 0.1 | | | F | F | A | A | 14 |
| Experimenta 1 Example 12-5 | | | | | | | 10 | | | F | A | A | A | 14 |

**[Table 13]**

| Experimenta 1 Example | Resin composition | | Large filler | | | Small filler | | | Total amount of fillers (mass% ) | Appearanc e of coating film | PSA adhesio n | Protectiv e film adhesive residue | Appearanc e after forming | Thicknes s (µm) |
|---|---|---|---|---|---|---|---|---|---|---|---|---|---|---|
| | Base resin | Hardener | Materia 1 | Particl e size (µm) | Amount (mass% ) | Materia 1 | Particl e size (µm) | Amount (mass% ) | | | | | | |
| Experimenta 1 Example 13-1 | Acryli c polyol | HDI+IPD I | Silica | 5 | 10 | Silica | 3 | 20 | 30 | A | A | F | A | 5 |

**[Table 14]**

| Experimenta 1 Example | Resin composition | | Large filler | | | Small filler | | | Total amount of fillers (mass% ) | Appearanc e of coating film | PSA adhesio n | Protectiv e film adhesive residue | Appearanc e after forming | Thicknes s (µm) |
|---|---|---|---|---|---|---|---|---|---|---|---|---|---|---|
| | Base resin | Hardener | Materia l | Particl e size (µm) | Amount (mass% ) | Materia l | Particl e size (µm) | Amount (mass% ) | | | | | | |
| Experimenta 1 Example 14-1 | Acryli c polyol | HDI+IPD I | Silica | 10 | 10 | Silica | 5 | 20 | 30 | A | A | A | A | 9 |
| Experimenta l Example 14-2 | | | | | | | 3 | | | A | A | A | A | 9 |
| Experimenta 1 Example 14-3 | | | | | | | 1 | | | A | A | A | A | 9 |

**[Table 15]**

| Experimenta 1 Example | Resin composition | | Large filler | | | Small filler | | | Total amount of fillers (mass% ) | Appearanc e of coating film | PSA adhesio n | Protectiv e film adhesive residue | Appearanc e after forming | Thicknes s (µm) |
|---|---|---|---|---|---|---|---|---|---|---|---|---|---|---|
| | Base resin | Hardener | Materia 1 | Particl e size (µm) | Amount (mass% ) | Materia 1 | Particl e size (µm) | Amount (mass% ) | | | | | | |
| Experimenta 1 Example 15-1 | Acryli c polyol | HDI+IPD I | Silica | 30 | 10 | Silica | 5 | 20 | 30 | A | A | A | A | 29 |
| Experimenta l Example 15-2 | | | | | | | 3 | | | A | A | A | A | 29 |
| Experimenta 1 Example 15-3 | | | | | | | 1 | | | A | A | A | A | 29 |

**[Table 16]**

| Experimental Example | Resin composition | | Large filler | | | Small filler | | | Total amount of fillers (mass%) | Appearance of coating film | PSA adhesion | Protective film adhesive residue | Appearance after forming | Thickness (µm) |
|---|---|---|---|---|---|---|---|---|---|---|---|---|---|---|
| | Base resin | Hardener | Material | Particle size (µm) | Amount (mass%) | Material | Particle size (µm) | Amount (mass%) | | | | | | |
| Experimental Example 16-1 | Acrylic polyol | HDI+IPDI | Silica | 50 | 10 | Silica | 3 | 20 | 30 | F | A | A | A | 48 |

**[Table 17]**

| Experimenta 1 Example | Resin composition | | Large filler | | | Small filler | | | Total amount of fillers (mass% ) | Appearanc e of coating film | PSA adhesio n | Protectiv e film adhesive residue | Appearanc e after forming | Thicknes s (µm) |
|---|---|---|---|---|---|---|---|---|---|---|---|---|---|---|
| | Base resin | Hardener | Materia 1 | Particl e size (µm) | Amount (mass% ) | Materia 1 | Particl e size (µm) | Amount (mass% ) | | | | | | |
| Experimenta 1 Example 17-1 | Acryli c polyol | HDI+IPD I | Silica | 15 | 1 | Silica | 3 | 20 | 21 | A | A | F | A | 10 |
| Experimenta 1 Example 17-2 | | | | | 3 | | | | 23 | A | A | A | A | 13 |
| Experimenta 1 Example 17-3 | | | | | 25 | | | | 45 | A | A | A | A | 14 |
| Experimenta 1 Example 17-4 | | | | | 30 | | | | 50 | F | A | A | A | 15 |

**[Table 18]**

| Experimenta 1 Example | Resin composition | | Large filler | | | Small filler | | | Total amount of fillers (mass% ) | Appearanc e of coating film | PSA adhesio n | Protectiv e film adhesive residue | Appearanc e after forming | Thicknes s (µm) |
|---|---|---|---|---|---|---|---|---|---|---|---|---|---|---|
| | Base resin | Hardener | Materia 1 | Particl e size (µm) | Amount (mass% ) | Materia 1 | Particl e size (µm) | Amount (mass% ) | | | | | | |
| Experimenta 1 Example 18-1 | Acryli c polyol | HDI+IPD I | Silica | 15 | 30 | Silica | 3 | 30 | 60 | F | A | A | F | 15 |
| Experimenta 1 Example 18-2 | | | | 10 | | | | 20 | 50 | F | A | A | A | 15 |

**[Table 19]**

| Experimenta 1 Example | Resin composition | | Large filler | | | Small filler | | | Total amount of fillers (mass% ) | Appearanc e of coating film | PSA adhesio n | Protectiv e film adhesive residue | Appearanc e after forming | Thicknes s (µm) |
|---|---|---|---|---|---|---|---|---|---|---|---|---|---|---|
| | Base resin | Hardener | Materia 1 | Particl e size (µm) | Amount (mass% ) | Materia 1 | Particl e size (µm) | Amount (mass% ) | | | | | | |
| Experimenta 1 Example 19-1 | Acryli c polyol | HDI+IPD I | Silica | 15 | 3 | Silica | 3 | 2 | 5 | F | F | A | F | 13 |
| Experimenta 1 Example 19-2 | | | | | | | | 5 | 8 | A | A | A | A | 13 |
| Experimenta 1 Example 19-3 | | | | | | | | 10 | 13 | A | A | A | A | 13 |
| Experimenta 1 Example 19-4 | | | | | | | | 20 | 23 | A | A | A | A | 13 |
| Experimenta 1 Example 19-5 | | | | | | | | 45 | 48 | A | A | A | A | 13 |
| Experimenta 1 Example 19-6 | | | | | | | | 50 | 53 | A | A | A | F | 13 |

**[Table 20]**

| Experimenta 1 Example | Resin composition | | Large filler | | | Small filler | | | Total amount of fillers (mass% ) | Appearanc e of coating film | PSA adhesio n | Protectiv e film adhesive residue | Appearanc e after forming | Thicknes s (µm) |
|---|---|---|---|---|---|---|---|---|---|---|---|---|---|---|
| | Base resin | Hardener | Materia 1 | Particl e size (µm) | Amount (mass% ) | Materia 1 | Particl e size (µm) | Amount (mass% ) | | | | | | |
| Experimenta 1 Example 20-1 | Acryli c polyol | HDI+IPD I | Silica | 15 | 25 | Silica | 3 | 2 | 27 | F | F | A | A | 14 |
| Experimenta 1 Example 20-2 | | | | | | | | 5 | 30 | A | A | A | A | 14 |
| Experimenta 1 Example 20-3 | | | | | | | | 10 | 35 | A | A | A | A | 14 |
| Experimenta 1 Example 20-4 | | | | | | | | 20 | 45 | A | A | A | A | 14 |
| Experimenta 1 Example 20-5 | | | | | | | | 25 | 50 | A | A | A | A | 14 |
| Experimenta 1 Example 20-6 | | | | | | | | 45 | 70 | A | A | A | F | 14 |
| Experimenta 1 Example 20-7 | | | | | | | | 50 | 75 | A | A | A | F | 14 |

**[Table 21]**

| Experimenta 1 Example | Resin composition | | Large filler | | | Small filler | | | Total amount of fillers (mass% ) | Appearanc e of coating film | PSA adhesio n | Protectiv e film adhesive residue | Appearanc e after forming | Thicknes s (µm) |
|---|---|---|---|---|---|---|---|---|---|---|---|---|---|---|
| | Base resin | Hardener | Materia 1 | Particl e size (µm) | Amount (mass% ) | Materia 1 | Particl e size (µm) | Amount (mass% ) | | | | | | |
| Experimenta 1 Example 21-1 | Acryli c polyol | TDI+IPD I | Silica | 15 | 10 | Silica | 5 | 20 | 30 | A | A | A | A | 14 |
| Experimenta 1 Example 21-2 | | HDI | | | | | | | | A | B | A | A | 14 |
| Experimenta 1 Example 21-3 | | IPDI | | | | | | | | A | A | A | F | 14 |
| Experimenta 1 Example 21-4 | | TDI | | | | | | | | A | B | A | A | 14 |

The results of the evaluation items were the same as those of the first to eleventh experimental example groups. Thus, it is found that none of the evaluation items depends on the type of polyol component.

### <Twenty-second experimental example group and discussion thereof>

In the twenty-second experimental example group, polyethylene (PE) particles, which were organic particles, were used as the large filler, and the particle size and amount of the PE particles were varied, and a relationship of the material, particle size, and amount of the large filler with each of the evaluation items was examined. Except for this, the power storage device packaging material 10 was produced in the same manner as in Experimental Example 18-1.

The results of the evaluation items are shown in Table 22.

**[Table 22]**

| Experimenta 1 Example | Resin composition | | Large filler | | | Small filler | | | Total amount of fillers (mass% ) | Appearanc e of coating film | PSA adhesio n | Protectiv e film adhesive residue | Appearanc e after forming | Thicknes s (µm) |
|---|---|---|---|---|---|---|---|---|---|---|---|---|---|---|
| | Base resin | Hardener | Materia 1 | Particl e size (µm) | Amount (mass% ) | Materia 1 | Particl e size (µm) | Amount (mass% ) | | | | | | |
| Experimenta 1 Example 22-1 | Acryli c polyol | HDI+IPD I | PE | 11 | 10 | Silica | 3 | 30 | 40 | A | A | A | A | 5 |
| Experimenta 1 Example 22-2 | | | | 11 | 3 | | | 30 | 33 | A | A | A | A | 4 |
| Experimenta 1 Example 22-3 | | | | 11 | 15 | | | 30 | 45 | A | A | A | A | 5 |
| Experimenta 1 Example 22-4 | | | | 11 | 25 | | | 30 | 55 | A | A | A | B | 6 |
| Experimenta 1 Example 22-5 | | | | 25 | 10 | | | 30 | 40 | A | A | A | A | 18 |
| Experimenta 1 Example 22-6 | | | | 11 | 1 | | | 30 | 31 | A | A | F | A | 4 |
| Experimenta 1 Example 22-7 | | | | 50 | 10 | | | 30 | 40 | F | A | A | A | 32 |

### (Appearance of coating film)

From the results, it is found that also in the case where PE particles are used as the large filler, when the average particle size of the large filler is 50 µm, it is impossible to form a substrate protective layer having a matte appearance that is uniform and dense without roughness. Specifically, due to the large average particle size of the large filler, the surface of the substrate protective layer had a matte appearance with roughness.

### (PSA adhesion)

It is found that the adhesive force of the PSA tape does not significantly vary depending on the material, particle size, or amount of the large filler.

### (Protective film adhesive residue)

In Experimental Example 22-6, due to the excessively small amount of large filler, the pressure-sensitive adhesive of the protective film remained on the surface of the substrate protective layer 12. From the results, it has been found that also in the case where PE particles are used as the large filler, in order to prevent the pressure-sensitive adhesive as a residue on the protective film, the amount of large filler should be 3 mass% or more.

### (Appearance after forming)

In Experimental Example 22-4, the amount of large filler was 25 mass%, and the total amount of large filler and small filler was 55 mass%, which was excessively large, thus causing the substrate protective layer after cold forming to have a gloss (shine).

### (Thickness)

In the first to twenty-first experimental example groups, the thickness of the substrate protective layer 12 was approximately the same as the particle size of the large filler. However, in the twenty-second experimental example group, in which PE particles were used as the large filler, the thickness of the substrate protective layer 12 was clearly smaller than the particle size of the large filler. This is because the PE particles were deformed by heat in the lamination process during production of the power storage device packaging material 10. Also in this case, the PSA adhesion and the protective film adhesive residue were evaluated as good, except for the protective film having an adhesive residue in Experimental Example 22-6. Furthermore, the appearance of the coating film was also evaluated as good, except for that of Experimental Example 22-7. In the evaluation of the appearance after forming, no cracks were observed in any of the experimental examples.

### <Summary of discussions>

The above results can be summarized as follows.

### (Appearance of coating film)

In order to obtain a substrate protective layer having a matte appearance that is uniform and dense without roughness, the following conditions 1-1 to 1-4 should be satisfied.
Condition 1-1: The average particle size of the small filler is 1 to 5 µm.
Condition 1-2: The amount of small filler is 5 mass% or more.
Condition 1-3: The average particle size of the large filler is 30 µm or less.
Condition 1-4: The amount of large filler is 25 mass% or less.

### (PSA adhesion)

In order for a PSA tape attached to the substrate protective layer to be firmly adhered to the substrate protective layer, the following conditions 2-1 to 2-3 should be satisfied. In order for the PSA tape to be more firmly adhered to the substrate protective layer, the following condition 2-4 also should be satisfied.
Condition 2-1: The average particle size of the small filler is 1 µm or more.
Condition 2-2: The amount of large filler is 1 mass% or more.
Condition 2-3: The amount of small filler is 5 mass% or more.
Condition 2-4: An alicyclic polyisocyanate is used as at least part of the polyisocyanate component.

### (Protective film adhesive residue)

In order to prevent the pressure-sensitive adhesive of the protective film from remaining on the surface of the substrate protective layer when the protective film is bonded to the substrate protective layer and is then peeled off, the following conditions 3-1 and 3-2 should be satisfied.
Condition 3-1: The average particle size of the large filler is 10 µm or more.
Condition 3-2: The amount of large filler is 3 mass% or more.

### (Appearance after forming)

In order to prevent the occurrence of cracks in the substrate protective layer during cold forming of the power storage device packaging material, the following conditions 4-1 and 4-2 should be satisfied.

At this time, in order for the substrate protective layer to maintain the gloss before cold forming, the following condition 4-3 or 4-4 should be satisfied.
Condition 4-1: The total amount of large filler and small filler is 50 mass% or less.
Condition 4-2: An aliphatic polyisocyanate or an aromatic polyisocyanate is used as at least part of the polyisocyanate component.
Condition 4-3: Inorganic particles are used as the large filler.
Condition 4-4: Polyethylene particles are used as the large filler.

### [Reference Signs List]

- 1: Battery element
- 2: Lead
- 10: Packaging material
- 10a: Recess
- 10b: Cover portion
- 11: Substrate layer
- 12: Substrate protective layer
- 13: Adhesive layer
- 14: Metal foil layer
- 15a: Anticorrosion treatment layer
- 15b: Anticorrosion treatment layer
- 16: Adhesive layer
- 17: Sealant layer
- 20: Secondary battery

## Claims

1. A power storage device packaging material comprising at least a substrate protective layer, a substrate layer, an adhesive layer, a metal foil layer, and a sealant layer in this order from an outer surface side, wherein
the substrate protective layer is made of a curable resin which is cured containing a plurality of types of particles having different average particle sizes,
the curable resin contains a polyol component as a base resin and a polyisocyanate component as a hardener, and
when, of the plurality of types of particles, particles having a large average particle size are referred to as a large filler and particles having a small average particle size are referred to as a small filler,
the average particle size of the large filler is 10 µm or more, and the average particle size of the small filler is 1 µm or more, and
an amount of the large filler contained in the substrate protective layer is 3 mass% or more, and an amount of the small filler contained in the substrate protective layer is 5 mass% or more.

2. The power storage device packaging material according to claim 1, wherein
the average particle size of the large filler is 30 µm or less, and the average particle size of the small filler is 5 µm or less, and the amount of the large filler is 25 mass% or less.

3. The power storage device packaging material according to claim 1 or 2, wherein
at least part of the polyisocyanate component is composed of an alicyclic polyisocyanate.

4. The power storage device packaging material according to any one of claims 1 to 3, wherein
at least part of the polyisocyanate component is composed of an aliphatic polyisocyanate or an aromatic polyisocyanate, and
the amount of the large filler is 25 mass% or less, and a total amount of the large filler and the small filler is 50 mass% or less.

5. The power storage device packaging material according to any one of claims 1 to 4, wherein
the large filler contains particles of an organic material.

6. The power storage device packaging material according to claim 5, wherein
the large filler contains particles of a thermoplastic organic material, and
the substrate protective layer has a thickness of 10 µm or less.

7. The power storage device packaging material according to any one of claims 1 to 6, wherein
the large filler contains particles of an inorganic material.

8. The power storage device packaging material according to any one of claims 1 to 7, wherein
the adhesive layer contains a color pigment.
